# EUROPEAN PATENT APPLICATION

(11) **EP 4 389 407 A1**
(43) Date of publication of application: **26.06.2024**
(21) Application number: 22383264.3
(22) Date of filing: 22.12.2022
(51) Int. Cl.: B29D 35/14, A43B 1/04, A43B 13/04, A43B 13/12

(54) **FOOTWEAR SOLE WITH ROPE WALL AND METHOD OF MANUFACTURE**

(71) Applicant: Proinvex Urban S.L., 03203 Elche - Alicante (ES)
(72) Inventor: Urban Bru, Francisco Manuel, 03203 Elche (Alicante) (ES)
(74) Representative: Carlos Hernando, Borja

(57) **Abstract**

16. The invention relates to a footwear sole with rope wall and method of manufacture that relates to a finished sole (1) for footwear of the type made from braided jute or esparto rope, normally used for espadrilles and similar footwear, and which, depending on the design, can have a greater or lesser thickness, as well as a heel wedge that is also of variable height. The finished sole (1) of the present invention presents the particularity of comprising an inner polyurethane core (4) that, in addition to being lightweight, among other advantages, gives it greater flexibility than other fillers used to date, as well as the ability to not get soaked and increase its weight when wet. A second aspect of the invention is the method of manufacture which allows said sole (1) to be obtained.

## Description

### OBJECT OF THE INVENTION

The invention, a footwear sole with rope wall and method of manufacture, relates to a finished sole for footwear of the type made from braided jute or esparto rope, normally used for espadrilles and similar footwear, and which, depending on the design, can have a greater or lesser thickness, as well as a heel wedge that is also of variable height. The finished sole of the present invention presents the particularity of comprising an inner polyurethane core that, in addition to being lightweight, among other advantages, gives it greater flexibility than other fillers used to date, as well as the ability to not get soaked and increase its weight when wet. A second aspect of the invention is the method of manufacture which allows said sole to be obtained.

The field of application of the present invention falls within the sector of the footwear industry, focusing particularly on the field of manufacturing footwear with rope/jute soles.

### BACKGROUND OF THE INVENTION

Today, rope or jute soles have a visible perimeter in which the lines of rope can be seen, one on top of another, forming a wall, resting on a supporting bottom of the footwear usually made of rubber, said wall of the sole and said bottom forming a hollow structure or a shell, the interior of which can be filled with rigid cork or with the rope itself. Thus, these soles are heavy and rigid, in other words, they are very inflexible with the consequent discomfort when walking. In addition, when it rains and the sole gets wet, not only is the outer rope of the sole wall permeated and soaked, but the interior is also permeated through the rope wall, thus increasing the weight of the bottom.

The objective of the present invention is, therefore, the development of a novel footwear sole to lighten and make jute or rope soles more flexible, to increase user comfort and avoid the problems of soles with rope or rubber filling when they get wet. To do so, the use of polyurethane, hereinafter PU, as a filler material is proposed, since it is a lightweight flexible material that does not get soaked or increase in weight when it gets wet.

However, using PU as a filler material presents some problems, such as successfully joining it to the rubber supporting bottom of the sole that soles of this type have during the casting of the PU, since, to achieve this, the rubber of the supporting bottom must be prepared by sanding the top or inside of said supporting bottom, and subsequently using an adhesive. Sanding the rubber of the supporting bottom is complicated since said rubber inside the shell or hollow structure of the sole has to be accessed from the outside and said inner surface of the supporting bottom is limited by the sole wall, thus making access difficult.

In view of the foregoing problems, the present invention proposes a solution that allows the hollow structure or shell to be filled with PU during the manufacture of the sole with rope wall.

### DESCRIPTION OF THE INVENTION

The footwear sole with rope and the method of manufacture, object of the invention, propose a solution to the foregoing problems. Thus, a first object of the invention is a finished footwear sole with rope wall according to claim 1.

Specifically, the footwear sole with rope wall comprises a structure made up of at least rope perimeter walls; a lower bottom, which acts as a support for the footwear; a filler core inside the perimeter walls, determining a front portion where the toes rest and a rear portion where the heel of the foot rests, the inner filler core being made of at least polyurethane (PU); and having, between said polyurethane (PU) core and the supporting bottom, an intermediate sheet of a porous material, preferably a fabric, acting as a joint between the polyurethane core and the supporting bottom of the sole. Said intermediate sheet of porous material must have sufficient porosity so that when the rubber is vulcanised during the method of manufacturing the sole and when the polyurethane (PU) is incorporated or introduced, preferably by casting, on said sheet, both the rubber and polyurethane in its liquid state are introduced into the pores of the sheet.

Preferably, the rope is a braided jute or esparto rope and the supporting bottom is made of rubber or a similar material.

Thus, the footwear sole with rope wall is normally used for espadrilles and similar footwear, and they may have variable thickness and may or may not have a heel wedge that is also of variable height, incorporating a rubber supporting bottom and an inner polyurethane filler core. Thus, the bottom sole object of the invention is essentially distinguished from espadrilles and similar footwear with rope on its sole due to the fact that its filler core, instead of consisting of a material like the rope itself or cork, which is currently used, is a polyurethane core. In this way, in addition to being very lightweight, this polyurethane gives the bottom greater flexibility and prevents it from getting soaked when it gets wet, so it does not increase its weight.

The aim of the intermediate sheet of porous material is to allow the rubber of the supporting bottom to join the polyurethane, which is introduced, preferably by casting, inside the hollow structure formed by: the rope/jute perimeter walls; the intermediate sheet of porous material, preferably a fabric; and the rubber bottom, so that the intermediate sheet of porous material is integrated into both the polyurethane core and the supporting bottom. Polyurethane also makes it possible to reduce the total weight of the sole and increase its flexibility, compared to a sole with its interior made of rope and/or cork, which are the materials used in the state of the art in footwear soles with rope or jute wall. The polyurethane also prevents the footwear from being permeated when it rains, and limits the increase in weight with respect to known footwear with rope/jute and with rope and/or cork filling.

The preferred materials are rubber or the like for the supporting bottom of the sole, as already mentioned; rope formed by esparto or jute threads intertwined for the wall of the sole; and the intermediate sheet of porous material is preferably a lightweight, low density and flexible fabric, more preferably a non-woven fabric. Alternatively, it can also be a paper-based material, such as cardboard, and in general, any porous flexible material compatible with polyurethane and rubber.

The footwear sole can have its front portion and its rear portion likely at the same level or it can also be wedge-shaped, so that the rear portion of the sole is elevated with respect to the front portion, in other words, the heel is elevated with respect to the toes. In this case, the filler core of the sole has an inclination between said front portion and said rear portion.

Regarding the filler core, it can comprise a single polyurethane of a first density with uniformity throughout the filling, or it can have at least one first polyurethane with a first density and at least one second polyurethane with a second density, so that different areas are determined in the filler core with different densities.

For example, the polyurethane core of the sole has a first area, corresponding to the front portion, with a first polyurethane with a first density, and a second area, corresponding to the rear portion, with a second polyurethane with a second density. In this way, the user will perceive different sensations between the heel and the tip of the foot, when resting the foot. Preferably, the density of the second polyurethane is greater than the density of the first polyurethane, so that the rear portion of the sole where the heel rests is stiffer than the front portion of the sole which flexes when walking. This arrangement is particularly interesting when the footwear sole with rope/jute wall is wedge-shaped, in other words, with the rear portion higher than the front portion. Likewise, in the rear portion of the sole, where the heel rests, the core of the sole that is made of a first polyurethane can incorporate a cavity filled with a second polyurethane with a lower density than the density of the first polyurethane, so that the heel support area of the sole is softer.

Different constructions with different densities can be used depending on the footwear requirements.

A second object of the invention is a method for manufacturing the footwear sole with rope wall according to claim 13. Said method of manufacture comprises the following steps:
a) introducing into a mould shaped as the footwear sole, the component or components that will make up the supporting bottom of said sole, said components being able to be a pre-vulcanised rubber layer, or particles, shavings or pellets of a rubber material.
b) arranging rope/jute strips inside the perimeter walls of the mould.
c) arranging a sheet of porous material, preferably a low-density, flexible and insulating non-woven fabric on the component, pre-vulcanised layer, or components, particles, shavings or pellets that will make up the sole bottom.
d) pressing the set of the previous elements introduced into the mould, without any type of adhesive, leaving the three elements, sheet of porous material, rope and supporting bottom material, joined by the material of the supporting bottom melted during pressing, forming a hollow structure with a gap between the perimeter walls of the sole, made of rope, and the inner sheet of porous material. This step is carried out without requiring any type of adhesive, so that, due to the porosity of the intermediate sheet material, preferably a fabric, and the rope material, everything remains joined to the rubber of the lower bottom, forming the aforementioned structure.
e) introducing, preferably by casting, at least one polyurethane, with a first density, in a liquid state inside the hollow structure, introducing it between the threads that make up the sheet of porous material as well as the threads that make up the rope.
f) cooling the at least one polyurethane, so that, after it is introduced, preferably by casting, approximately between 5 and 10 seconds, the polyurethane begins to swell, being encapsulated between the rope walls and the fabric sheet, forming a filler core of the sole attached to the rope of the perimeter walls, as well as to the sheet of porous material, such that a footwear sole with a supporting bottom, a rope perimeter wall or walls, a filler core and a sheet of porous material between the core and the supporting bottom of the sole are formed.

To achieve a sole with two densities in the filler core as mentioned above, in the step of introducing polyurethane, it is possible to introduce, preferably by casting, a second polyurethane with a second density, thus determining the at least two mentioned areas in the sole with at least two different densities. Likewise, in the step of introducing polyurethane, it is possible to arrange the top covering of the sole so that it is joined to the filler core of the same, without the need to use adhesives, and therefore, eliminating an additional step with respect to the traditional methods of manufacturing footwear soles of this type with rope wall.

### DESCRIPTION OF THE DRAWINGS

To complete this description and make it easier to understand, a set of figures is included as an integral part thereof, depicted in an illustrative and non-limiting manner.
Figure 1 shows a schematic side and sectional view of an example of the rope bottom for footwear object of the invention, representing the different parts it comprises, as well as the arrangement thereof.
Figure 2 shows a top perspective view of the bottom in an initial manufacturing step, showing the rope shell and the sheet of lightweight fabric comprised between the rubber sole and the polyurethane core.
Figure 3 shows a top perspective view of the bottom in an intermediate manufacturing step in which the polyurethane core has already been incorporated into the hollow rope structure.
Figure 4 shows a top perspective view of the bottom in another manufacturing step in which a leather covering has been incorporated.

### PREFERRED EMBODIMENT OF THE INVENTION

In view of the aforementioned figures, and in accordance with the numbering adopted, an exemplary embodiment of a footwear sole with rope wall is described below, in several of its manufacturing steps.

Thus, as shown in said figures, the sole (1) of the invention is of the type that essentially comprises:
- a hollow rope (2) structure that incorporates at least the perimeter wall or walls of the sole (1);
- a lower supporting bottom (3) preferably made of rubber, on which the footwear rests on the surface;
- an inner filler core (4) of the hollow structure of the sole; and preferably,
- a top covering (5), made of leather, fabric or plastic, on which the footwear user's foot rests.

It is preferable that this covering (5) be present on the sole (1), but it is not essential and it can be placed on the sole (1) in a step subsequent to the manufacture of said sole (1) or it may not even be placed. In this way, the sole (1) object of the present invention may or may not have this covering (5).

The inner filler core (4) of the sole is made of polyurethane (PU) and, moreover, between said polyurethane (PU) core (4) and the rubber supporting bottom (3), an intermediate sheet (6) of porous material, preferably a fabric, is incorporated, which acts as a joint between the polyurethane (PU) core (4) and the rubber supporting bottom (3), as said sheet of porous material is integrated into the polyurethane (PU) of said core (4) and at the same time joined to the supporting bottom (3). Preferably, said intermediate sheet (6) of porous material is made of a lightweight, low-density, highly flexible and insulating fabric, more preferably a non-woven fabric.

Furthermore, although in one embodiment the polyurethane (PU) core (4) of the sole (1) has a uniform density throughout the filling that defines it, optionally, said core (4) comprises areas (4a, 4b, 4c) of different densities.

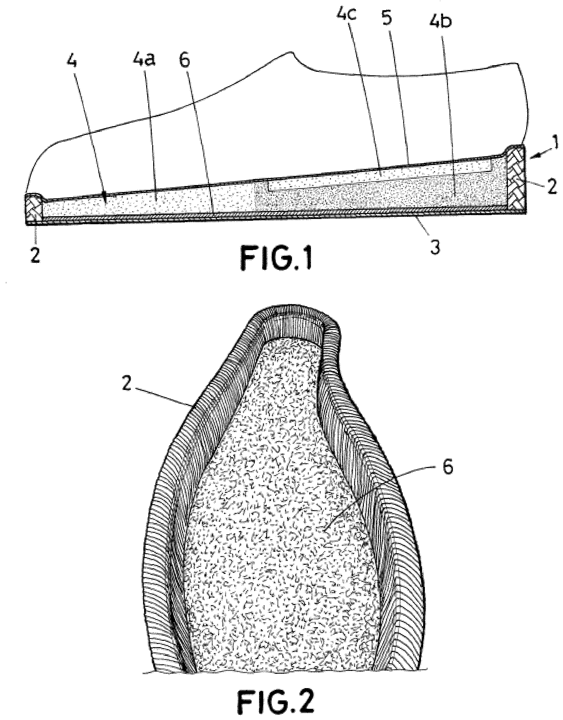

Thus, looking at Figure 1, it can be seen how, in a non-limiting embodiment, the sole (1) of the invention has a wedge and comprises a polyurethane (PU) core (4) which, in turn, has a first area (4a), corresponding to the front portion of the sole (1), with a first density of polyurethane (PU), and a second area (4b), corresponding to the rear portion of the sole (1), with a second density of polyurethane, this second density being greater than the first density of polyurethane.

Furthermore, alternatively, in the top of the rear portion of the sole (1), where the heel of the user's foot rests, the polyurethane (PU) core (4) of the sole (1) incorporates a cavity (4c) filled with lower density polyurethane (PU).

Lastly, according to another optional feature of the sole (1) of the invention, the top covering (5) can be joined to the top face of the polyurethane (PU) core (4) during the formation of the sole without the need for adhesive, said covering (5) being preferably a leather covering, although it could also be made of plastic or fabric.

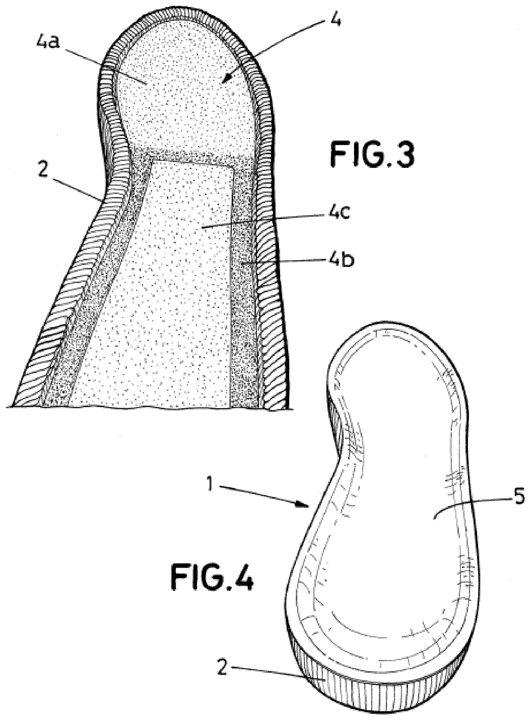

For its part, the method for manufacturing the sole (1) object of the invention comprises at least the following steps:
a) introducing into a mould shaped as the footwear sole (1), the component or components, preferably made of a material such as rubber, that will make up the supporting bottom (3) of the sole (1). This component can be a pre-vulcanised rubber layer that will act as a supporting bottom or it can be the particles, shavings or pellets of a rubber material that will form the supporting bottom (3) of the bottom (1),
b) arranging rope/jute (2) strips inside the perimeter walls of the mould that will act as a wall or walls of the sole (1),
c) arranging a sheet of porous material (6), preferably a fabric, on the component or components that will make up the supporting bottom (3);
d) pressing the set of the previous elements introduced into the mould, without any type of adhesive, leaving the three elements, sheet of porous material (6), rope (2) and supporting bottom material (3), joined by the material of the supporting bottom (3) melted during pressing, forming a structure with a gap between the rope (2) perimeter wall or walls of the sole (1) and the inner sheet of porous material (6), as shown in Figure 2;
e) introducing, preferably by casting, at least one polyurethane (PU), with a first density, in a liquid state inside the gap of the structure of the sole (1),
f) cooling the at least one polyurethane, so that it begins to swell, being encapsulated between the rope (2) wall or walls and the fabric sheet (6), forming a filler core (4) of the sole (1) attached to the rope (2) of the perimeter wall or walls, as well as to the sheet of porous material (6), forming a footwear sole (1) with rope/jute (2) wall, with a supporting bottom (3), with a filler core (4) and a sheet of porous material (6) between the core (4) and the supporting bottom (3). Figure 3 shows the result of introducing the polyurethane (PU) into the structure and its integration into the rope (2) of the wall or walls once the PU has swelled.

Optionally, in the step of incorporating polyurethane (PU), two polyurethanes with different densities are combined inside the hollow structure formed by the rope (2) and the sheet (6) of compressed porous material with the supporting bottom (3), defining different areas (4a, 4b, 4c) with different densities in the filler core (4).

Subsequently, the method can further comprise a subsequent step of incorporating a top covering (5), which can be joined using any conventional fixing system. However, preferably, the method of the present invention comprises the incorporation of said top covering (5) in the step of introducing polyurethane (PU), preferably by casting, so that it is joined to said polyurethane (PU) without adhesive. Said top covering (5) is preferably a leather or fabric covering. Figure 4 shows an example of the same applied to the sole (1), arranged on the inner core (4) of said sole (1) and on the rope/jute (2) wall or walls.

## Claims

1. A footwear sole with rope wall, comprising a structure made up of at least one or more rope (1) perimeter walls; a lower supporting bottom (3) of the sole (1); a filler core (4) inside the perimeter wall or walls, determining a front portion where the toes rest and a rear portion where the heel of the foot rests,
**characterised in that** the inner filler core (4) is made of at least polyurethane (PU); and **in that**, between said polyurethane (PU) core (4) and the supporting bottom (3), it has an intermediate sheet (6) of porous material, acting as a joint between the polyurethane (PU) core (4) and the supporting bottom (3).

2. The sole, according to claim 1, **characterised in that** the intermediate sheet (6) is integrated into the polyurethane (PU) core (4) as well as into the supporting bottom (3).

3. The sole, according to any of the preceding claims, **characterised in that** the supporting bottom (3) is made of rubber or a similar material.

4. The sole, according to any of the preceding claims, **characterised in that** it is wedge-shaped, with the rear portion elevated with respect to the front portion.

5. The sole, according to any of the preceding claims, **characterised in that** the core (4) comprises polyurethane (PU) of a first uniform density throughout the filling.

6. The sole, according to any of claims 1 to 4, **characterised in that** the core (4) comprises at least one first polyurethane (PU) with a first density and at least one second polyurethane (PU) with a second density, determining areas (4a, 4b, 4c) in the core (4) of different density.

7. The sole, according to claim 4 or 6, **characterised in that** the polyurethane (PU) core (4) has a first area (4a), corresponding to the front portion, with a first polyurethane (PU) with a first density, and a second area (4b), corresponding to the rear portion, with a second polyurethane (PU) with a second density.

8. The sole, according to claim 7, **characterised in that** the density of the second polyurethane is greater than the density of the first polyurethane.

9. The sole, according to any of the preceding claims, **characterised in that** in the rear portion of the same sole (1), where the heel rests, the core (4) of a first polyurethane (PU) incorporates a cavity (4c) filled with a second polyurethane (PU) with a lower density than the density of the first polyurethane (PU).

10. The sole, according to any of the preceding claims, **characterised in that** the intermediate sheet of porous material (6) is made of a lightweight, low-density and flexible fabric.

11. The sole, according to claim 10, **characterised in that** the intermediate sheet is a non-woven fabric.

12. The sole, according to any of the preceding claims, **characterised in that** it comprises a top covering (5) over the polyurethane (PU) core (4).

13. A method for manufacturing a footwear sole with rope wall, **characterised in that** it comprises at least the following steps:
a) introducing into a mould shaped as the footwear sole (1), the component or components made of a rubber material, which will make up a supporting bottom (3) of the sole (1),
b) arranging rope/jute (2) strips inside the perimeter walls of the mould that will made up the rope/jute (2) wall or walls of the sole (1),
c) arranging a sheet of porous material (6) on the component or components that will make up the sole (3);
d) pressing the set of the previous elements introduced into the mould, without any type of adhesive, leaving the three elements, sheet of porous material (6), rope (2) and component or components of the supporting bottom (3), joined by the material of the supporting bottom (3) melted during pressing, and forming a structure with a gap between the rope (2) perimeter walls and the inner sheet of porous material (6);
e) introducing at least one polyurethane (PU), with a first density, in a liquid state, inside the gap of the hollow structure,
f) cooling the at least one polyurethane, so that it begins to swell, being encapsulated between the rope (2) perimeter walls of the hollow structure and the sheet of porous material (6), forming a filler core (4) joined to the rope (2) of the walls as well as to the sheet of porous material (6), forming a footwear sole with a supporting bottom (3), rope (2) perimeter walls, a filler core (4) and a sheet of porous material (6) between the core (4) and the sole (3).

14. The method, according to claim 13, **characterised in that** after the step of introducing the at least one polyurethane, a second polyurethane is introduced, also in a liquid state, with a second density, thus determining at least two areas (4a, 4b, 4c) in the sole (1) with at least two different densities.

15. The method, according to any of claims 13 or 14, **characterised in that** in the step of introducing polyurethane, a top covering (5) is provided, which is joined to the filler core (4) without adhesive.
